# EUROPEAN PATENT APPLICATION

(11) **EP 1 180 539 A2**
(43) Date of publication of application: **20.02.2002**
(21) Application number: 01870179.7
(22) Date of filing: 17.08.2001
(51) Int. Cl.: C09D 5/02, C09D 7/12

(54) **Reduction of odors from coating material**

(30) Priority: 18.08.2000 US 226375 P
(71) Applicant: THE PROCTER & GAMBLE COMPANY, Cincinnati, Ohio 45202 (US)
(72) Inventor: Uchiyama, Hirotaka, Loveland, Ohio 45140 (US); DuVal, Dean Larry, Lebanon, Ohio 45036 (US); Woo, Ricky Ah-Man, Hamilton, Ohio 45011 (US); Jensen, John Michael, Wyoming, Ohio 45215 (US); Cetti, Jonathan Robert, Fairfield, Ohio 45014 (US); Archambault, Denise Lynn, Kettering, Ohio 45440 (US)
(74) Representative: Engisch, Gautier

(57) **Abstract**

The present invention relates to the use of an entrapping agent, preferably cyclodextrin, to reduce the odor emitted by an aqueous latex-based coating material, in particular a latex-based paint.

## Description

### TECHNICAL FIELD

The present invention relates to the use of entrapping agents such as cyclodextrin for odor reduction, especially in coating materials such as stains, sealants, nail polish and, especially, paints. It also relates to methods for reducing the odor emitted by such coating materials and kits for reduction of such odors. It also relates to the use of cyclodextrin and other entrapping agents in the reduction of odors inherent in products as a result of their manufacture.

### BACKGROUND OF THE INVENTION

Latex-based paint compositions are commonly used both in industry and by individual consumers for painting walls and other surfaces. Latex-based paints typically comprise water, pigment and a dispersed polymeric binder. The binder is usually vinyl and/or acrylic or urethane based. During manufacture of the paint a certain amount of decomposition of the binder occurs to form by-product molecules such as acetates, short chain aldehydes, ketones and fatty acids. These are responsible for the distinctive and often undesirable odor of paint experienced by the user both on opening of the container, during painting of surfaces and (often more undesirable) over an extended period of time as the paint dries on the substrate to which it has been applied.

In addressing this problem there have been suggestions in EP-A-982,313, EP-A-967,265, CN 1,206,731 and JP-A-05/255691 to include perfumes in paint compositions. However, this approach acts only by masking the odor, and quality and time of effectiveness depend greatly on selecting the relative volatility of the perfume material and the odor materials.

Another approach would be to use, in producing the paint, only components which do not give significant odor problems. This would have the disadvantage that the types of material which can be used to produce the paint are limited and it is not necessarily possible to select the binders etc which are most appropriate for the end use.

Therefore it would be desirable to be able to reduce odor problems, and in particular those odor problems which are specific to latex-based paints containing binder polymers such as those based on vinyl and/or acrylic monomers or urethane polymers in dispersion.

### SUMMARY OF THE INVENTION

The present invention relates to the use of an entrapping agent, preferably cyclodextrin, to reduce the odor emitted by an aqueous latex-based coating material, in particular a latex-based paint.

### DETAILED DESCRIPTION OF THE INVENTION

In the present invention, the odor emitted by an aqueous latex-based coating material, preferably a latex-based paint, is reduced by adding to the coating material during or after its manufacture an entrapping agent, whereby the odor emitted by the coating material is reduced. As used herein, the term "coating material" refers not only to materials that adhere to substrates, but also to materials that surround or impregnate a substrate. Additionally, as used herein, the term "odor" or "odorous molecule" refers to materials that elicit a human's sense of smell.

Paint materials which contain cyclodextrin molecules are known from EP-A-802,244. The cyclodextrin is included for modification of gloss and flow properties. In US 5,137,571 cyclodextrin is included in thickeners used in aqueous systems. In DE-A-4434584 cyclodextrin is used in vehicle lacquers, it is stated for preventing defects in the coatings.

Cyclodextrins are known as complexing agents.

There are disclosures in JP63/254174 and CN 1008915 of inclusion of cyclodextrin in coating compositions wherein the cyclodextrin is complexed with a perfume material. The aim here appears to be to control the release rate of the perfume, which is the agent which then improves odor properties of the paint. There has been no suggestion that the cyclodextrin itself might alleviate odor problems. US 5,906,981 discloses delivery of biocide to aqueous compositions, including paint, complexed with cyclodextrin. Cyclodextrin is disclosed in US 5,668,097 as a component of a product which controls odors on surfaces when applied to those surfaces. Cyclodextrin has been generally mentioned in the context of odor control compositions in JP-A-04/156851 and JP-A-04/156852, but these references appear to be concerned primarily with coatings for bed sheets to control the odor of the sheets. There is reference generally to the paint and printing industry. There is no mention of the specific problems associated with latex-based paint nor any suggestion that cyclodextrin could be incorporated in coatings to control malodor. Furthermore, this application appears to require organic acid as an essential component and it is unclear what is the precise function of the cyclodextrin.

Similarly, WO98/32473 discloses the use of a list of materials which include cyclodextrin, for reducing emission of HCN, amines or thio compounds. There is a general reference to paints in the description but no indication that any of the listed materials are useful in solving the particular problems associated with latex-based paints. The entrapping agent used in the invention can be any suitable entrapping agent for reduction of the odor emitted by aqueous latex-based coating materials. Preferably it is cyclodextrin, although in this specification the term "entrapping agent" includes zeolite and activated carbon.

In the invention the entrapping agent is highly preferably a cyclodextrin. We have found surprisingly that cyclodextrin is particularly suitable for removal of the particular odor problems which arise with latex-based paints. In particular, the cyclodextrin is in monomeric form and is highly preferably in water-soluble form. Solubilized, water-soluble cyclodextrin can exhibit more efficient capturing of odor molecules than non-water-soluble cyclodextrin. Monomeric cyclodextrins are those which contain only a single cavity structure per molecule. For instance, a monomeric alpha-cyclodextrin contains 6 glucose units, a monomeric beta-cyclodextrin contains 7 glucose units and a monomeric gamma-cyclodextrin contains 8 glucose units, each arranged in a donut-shaped ring. Cyclodextrins are known which are in polymeric form and contain more than one cyclodextrin ring per molecule, either by polymerisation of cyclodextrin or copolymerisation or grafting with other polymeric materials. Polymeric cyclodextrins are not preferred in the invention. Further, cyclodextrins in water-insoluble form are known, usually immobilised on a carrier material. Again, cyclodextrin in this form is not preferred.

The "cyclodextrin" may be any of the known cyclodextrins such as unsubstituted cyclodextrins containing from six to twelve glucose units, especially alpha-cyclodextrin, beta-cyclodextrin, gamma-cyclodextrin and/or their derivatives and/or mixtures thereof. The alpha-cyclodextrin consists of six glucose units, the beta-cyclodextrin consists of seven glucose units, and the gamma-cyclodextrin consists of eight glucose units arranged in donut-shaped rings. The specific coupling and conformation of the glucose units give the cyclodextrins a rigid, conical molecular structures with hollow interiors of specific volumes. The "lining" of each internal cavity is formed by hydrogen atoms and glycosidic bridging oxygen atoms; therefore, this surface is fairly hydrophobic. The unique shape and physical-chemical properties of the cavity enable the cyclodextrin molecules to absorb (form inclusion complexes with) organic molecules or parts of organic molecules which can fit into the cavity, especially the malodor molecules which exist in latex paints and other aqueous coatings. Therefore, cyclodextrins, and especially mixtures of cyclodextrins with different size cavities, can be used to complex with the unwanted odor molecules. The complexation between cyclodextrin and the malodorous molecules occurs particularly rapidly in the presence of water. However, the extent of the complex formation can also depend on the polarity of the absorbed malador molecules.

Preferably, the cyclodextrins used in the present invention are highly water-soluble, such as alpha-cyclodextrin and/or derivatives thereof, gamma-cyclodextrin and/or derivatives thereof, derivatised beta-cyclodextrins, and/or mixtures thereof. The derivatives of cyclodextrin consist mainly of molecules wherein some of the OH groups are converted to OR groups. Cyclodextrin derivatives include, for instance, those with short chain alkyl groups such as methylated cyclodextrins, and ethylated cyclodextrins, wherein R is a methyl or an ethyl group; those with hydroxyalkyl substituted groups, such as hydroxypropyl cyclodextrins and/or hydroxyethyl cyclodextrins, wherein R is a-CH₂-CH(OH)-CH₃ or a -CH₂CH₂-OH group; branched cyclodextrins such as maltose-bonded cyclodextrins; cyclodextrin glycerol thers with structure analogous to hydroxypropyl cyclodextrins, but with the side chains forming-CH₂CH(CH₂OH)- bridges between 2' and 3' hydroxyl oxygens on the glucosyl units; cationic cyclodextrins such as those containing 2-hydroxy-3-(dimethylamino)propyl ether, wherein R is CH₂-CH(OH)-CH₂-N(CH₃)₂ which is cationic at low pH; quaternary ammonium, e.g., 2-hydroxy-3-(trimethylammonio)propyl ether chloride groups, wherein R is CH₂-CH(OH)-CH₂-N+(CH₃)₃Cl-; anionic cyclodextrins such as carboxymethyl cyclodextrins, cyclodextrin sulfates, and cyclodextrin succinylates; amphoteric cyclodextrins such as carboxymethyl/quaternary ammonium cyclodextrins; cyclodextrins wherein at least one glucopyranose unit has a 3-6-anhydro-cyclomalto structure, e.g., the mono-3-6-anhydrocyclodextrins, as disclosed in "Optimal Performances with Minimal Chemical Modification of Cyclodextrins", F. Diedaini-Pilard and B. Perly, The 7th International Cyclodextrin Symposium Abstracts, April 1994, p. 49, said references being incorporated herein by reference; and mixtures thereof. Other cyclodextrin derivatives are disclosed in U.S. Pat. Nos: 3,426,011, Parmerter et al., issued Feb. 4, 1969; 3,453,257; 3,453,258; 3,453,259; and 3,453,260, all in the names of Parmerter et al., and all issued July 1, 1969; 3,459,731, Gramera et al., issued Aug. 5, 1969; 3,553,191, Parmerter et al., issued Jan. 5, 1971; 3,565,887, Parmerter et al., issued Feb. 23, 1971; 4,535,152, Szejtli et al., issued Aug. 13, 1985; 4,616,008, Hirai et al., issued Oct. 7, 1986; 4,678,598, Ogino et al., issued Jul. 7, 1987; 4,638,058, Brandt et al., issued Jan. 20, 1987; and 4,746,734, Tsuchiyama et al., issued May 24, 1988; all of said patents being incorporated herein by reference. Further cyclodextrin derivatives suitable herein include those disclosed in V. T. D'Souza and K. B. Lipkowitz, Chemical Reviews: Cyclodextrins, Vol. 98, No. 5 (American Chemical Society, July/August 1998), which is incorporated herein by reference.

Highly water-soluble cyclodextrins are those having water solubility of at least about 10 g in 100 ml of water at room temperature, preferably at least about 20 g in 100 ml of water, more preferably at least about 25 g in 100 ml of water at room temperature.

Examples of preferred water-soluble cyclodextrin derivatives suitable for use herein are hydroxypropyl alpha-cyclodextrin, methylated alpha-cyclodextrin, methylated beta-cyclodextrin, hydroxyethyl beta-cyclodextrin, hydroxypropyl beta-cyclodextrin, hydroxypropyl gamma-cyclodextrin, and methylated gamma-cyclodextrin. Hydroxyalkyl cyclodextrin derivatives preferably have a degree of substitution of from about 1 to about 14, more preferably from about 1.5 to about 7, wherein the total number of OR groups per cyclodextrin is defined as the degree of substitution. Methylated cyclodextrin derivatives typically have a degree of substitution of from about 1 to about 18, preferably from about 3 to about 16. A known methylated beta-cyclodextrin is heptakis-2,6-di-O-methyl-beta-cyclodextrin, commonly known as DIMEB, in which each glucose unit has about 2 methyl groups with a degree of substitution of about 14. A preferred, more commercially available, methylated beta-cyclodextrin is a randomly methylated beta-cyclodextrin, commonly known as RAMEB, having different degrees of substitution, normally of about 12.6. RAMEB is more preferred than DIMEB, since DIMEB affects the surface activity of the preferred surfactants more than RAMEB. The preferred cyclodextrins are available, for instance, from Cerestar USA, Inc. and Wacker Chemicals (USA), Inc.

It can be preferred to use a mixture of cyclodextrins. Such mixtures tend to absorb odors more broadly by complexing with a wider range of odoriferous molecules having a wider range of molecular sizes. Preferably at least a portion of the cyclodextrins is alpha-cyclodextrin and its derivatives thereof, gamma-cyclodextrin and its derivatives thereof, and/or derivatised beta-cyclodextrin; more preferably a mixture of alpha-cyclodextrin, or an alpha-cyclodextrin derivative, and derivatised beta-cyclodextrin, even more preferably a mixture of derivatised alpha-cyclodextrin and derivatised beta-cyclodextrin; and most preferably a mixture of hydroxypropyl alpha-cyclodextrin and hydroxypropyl beta-cyclodextrin, and/or a mixture of methylated alpha-cyclodextrin and methylated beta-cyclodextrin.

Non-derivatised beta-cyclodextrin is generally not preferred when the composition contains surfactant since it affects the surface activity of most of the preferred surfactants that are compatible with the derivatized cyclodextrins.

In the present invention it is preferred that the entrapping agent, in particular cyclodextrin, is used in uncomplexed form. The same applies to other entrapping agents used in the invention. That is, they are added in a form such that they are capable of forming complexes with the odor molecules present in the latex-based coating material to be treated.

The cavities within the cyclodextrin in the compositions of the present invention should remain essentially unfilled (i.e. the cyclodextrin remains uncomplexed and free) or filled with only weakly complexing materials when in solution, in order to allow the cyclodextrin to absorb (i.e. complex with) various malodor molecules.

A preferred class of zeolites for use in the invention as entrapping agents is characterized as the class of "intermediate" silicate/aluminate zeolites. The intermediate zeolites are characterized by SiO₂/AlO₂ molar ratios of less than about 10. Preferably the molar ratio of SiO₂/AlO₂ ranges from about 2 to about 10. The intermediate zeolites have an advantage over the "high" zeolites. The intermediate zeolites have a higher affinity for odors, they are more weight efficient for odor absorption because they have a larger surface area, and they are more moisture tolerant and retain more of their odor absorbing capacity in water than the high zeolites. A wide variety of intermediate zeolites suitable for use herein are commercially available as Valfor® CP301-68, Valfor® 300-63, Valfor® CP300-35, and Valfor® CP300-56, available from PQ Corporation, and the CBV100® series of zeolites from Conteka.

Zeolite materials marketed under the trade names Abscents and Smellrite, available from The Union Carbide Corporation and UOP are also preferred. These materials are typically available as a white powder in the 3-5 micron particle size range.

The entrapping agent can be activated carbon. The carbon material suitable for use in the present invention is known in commercial practice as an absorbent for organic molecules and/or for air purification purposes. Often, such carbon material is referred to as "activated" carbon or "activated" charcoal. Such carbon is available from commercial sources under such trade names as; Calgon-Type CPG® ; Type PCB® ; Type SGL® ; Type CAL® ; and Type OL® .

The entrapping agent may be used to reduce the odor emitted by the coating material after its manufacture and before use. That is, it is used to reduce the odor experienced by the user on opening the container of coating material.

However, it may be more appropriate in some cases for reducing odor which is emitted as the coating composition dries after application to a substrate such as a wall, ceiling, floor or item of furniture. In an aqueous environment, i.e. the aqueous coating composition itself, strongly hydrophilic odor molecules, which are highly water-soluble, tend to be only partially absorbed. Thus, complexation of certain odor molecules is less effective when they are present at low levels in the aqueous coating material itself. However, as the water is being removed as the coating composition dries molecules of this type have greater affinity with cyclodextrin or other entrapping agent and complex more readily.

The entrapping agent may be used in any suitable manner for odor reduction. For instance, it can be added to the coating composition during its manufacture. In this case, it is preferred that the entrapping agent is added to the coating composition at a stage when an emulsion containing water, binder and surfactant has already been formed. This is in contrast with EP-A-802,244 in which cyclodextrin was used for improvement of viscosity and flow properties, when it is likely to have been added prior to formation of the emulsion.

However, a preferred use of the entrapping agent comprises adding it to the finished product coating material. In preferred cases addition can be by the end user or a supplier, often not the manufacturer, of the coating material to the end user.

For instance, the domestic consumer can use the entrapping agent by addition to paint or other coating composition which has been purchased. Industrial users of coating compositions may also purchase the coating material and subsequently use the entrapping agent for odor reduction.

This allows the domestic consumer to use compositions containing entrapping agent to selectively reduce odor problems in coating compositions such as latex paint, without the necessity for the manufacturer of the coating composition to include the entrapping agent in the material.

Thus according to a further aspect of the invention we provide a process of treating a coating material, preferably paint, so as to reduce the odor it emits, comprising adding to a volume of not more than sixty gallons of the coating material an odor-reducing composition comprising entrapping agent and, optionally, additional components such as binder and viscosity control agent.

Preferred features of the entrapping agent are as discussed above.

The process may be one in which the volume of coating composition treated is smaller than production volumes of coating. Generally the volume is less than 60 gallons and may be at consumer level, for instance not more than 6 or 5 gallons, preferably not more than 3 gallons, more preferably not more than 1 gallon of the coating material.

An advantage of processes of this type is that the consumer may purchase paint or other coating material compositions as desired and purchase separately odor-reducing compositions which may then be mixed prior to use of the coating material. The system allows flexibility in that for instance the amount of odor-reducing composition used can be tailored to the nature of the coating material.

The entrapping agent and odor-reducing composition may also be used by the industrial user, that is, a user who requires large volumes of coating material. In this case, the invention is particularly beneficial when the odor- reducing composition is added to the coating material shortly before it is used. Thus the odor emitted during and after application may be reduced. This has the advantage that the manufacturer of the coating material does not have to devise specific systems which ensure preservation and prevention of separation of the entrapping agent in the coating material product but the malodor can be reduced at precisely the point where it is most problematic.

The problem can be addressed particularly by means of a further aspect of the invention which is a process of treating a coating material, preferably paint, so as to reduce the odors it emits, comprising adding to the coating material an odor-reducing composition comprising entrapping agent and subsequently applying at least a portion of the treated coating material to a substrate, preferably a wall, within two weeks, preferably within one week, for instance within 24 hours of adding the odor reducing composition to the coating material.

Preferably at least some of the coating material treated is applied to the substrate within 3 hours, preferably within 2 hours, more preferably within 1 hour, of adding the odor reducing composition.

The odor-reducing compositions may be supplied in unit dosages, each unit being appropriate for treatment of a specified volume of coating material (see discussion of amounts below).

A further aspect of the invention is directed to a kit for use in reduction of the odor emitted by a coating material, preferably paint, comprising (a) an odor-reducing composition comprising an entrapping agent and (b) instructions to add the odor-reducing composition to a coating composition, preferably a paint composition, in order to reduce the odor emitted by the composition.

In all aspects of the invention the odor-reducing composition containing entrapping agent is preferably mixed into the volume of coating material for at least one minute, often not more than one hour, preferably from 5 to 15 minutes.

Odor-reducing compositions containing the entrapping agent may be in solid form. The concentration of entrapping agent in such compositions is often at least 50% and may be as high as 90 or 100%.

Alternatively, and preferably, the odor-reducing composition is in liquid form. In such liquid compositions the concentration of entrapping agent is generally at least 0.025 wt.%, often at least 2 wt.% or 10 wt.%, preferably from 20 to 60 wt.%, based on total weight of liquid composition.

The entrapping agent is generally used such that after it is included in the coating material whose odor is to be reduced the amount of entrapping agent present in the coating material is at least 0.025%, for instance at least 1%, preferably at least 3%. It may be up to 50% or 40%, but generally it is not more than 25%, often less than 15% or 10%. We have found that amounts of around 5% are often optimum.

When the encapsulating agent is water-soluble, for instance if it is a cyclodextrin, it is generally used in amounts below its solubility limit. However, in some cases it can be advantageous to include cyclodextrin in amounts greater than its solubility limit. The coating composition, e.g. paint, as applied will then contain undissolved cyclodextrin which remains in the coating on the substrate to which it is applied. After the coating has dried and the substrate, eg a wall, is subsequemtly wetted, the cyclodextrin will redissolve and is available to take up further odors from the environment.

When the coating composition contains a binder polymer, for instance when it is a paint composition, the ratio of entrapping agent such as cyclodextrin to binder polymer is preferably from 0.001 to 5, more preferably 0.005 to 3.

It can be advantageous to include in the odor-reducing composition a binder of the same type as is present in the coating material. It can also be preferred that the viscosity of the odor-reducing composition be similar to that of the coating material at the time of addition. Preferably the viscosity of the odor-reducing composition is from 60 to 140% of that of the coating material, more preferably 80 to 120%, in particular from 80 to 120%.

The viscosity may be adjusted by means of any suitable viscosity adjusting material.

The coating material treated may be any coating composition, especially those which are aqueous-based and in the form of a latex comprising water-insoluble binder polymer. In particular, polymeric binder materials of the type often present in paints are preferred constituents. The invention is particularly useful when applied to compositions which contain decomposition products, by products and/or residual unreacted monomer. These can be acetate, short-chain aldehyde, ketone and/or fatty acid molecules. Short-chain molecules generally contain alkyl groups having from 1 to 10, often 1 to 8 carbon atoms.

The binders are preferably based on vinyl and/or acrylic monomers or are urethane binders. These binders are often oxidised during the manufacturing process. This leads to by-products which, along with residual unreacted monomer, are responsible for undesirable odor.

Compositions in which the invention is most useful generally contain from 2 to 30% binder, often 15 to 25%. The water content is often from 5 to 30%, for instance from 12 to 18%. The composition may also contain thickeners, for instance starch and proteins, in amounts up to 5%, often from 1 to 2%. The content of inorganic materials is often from 5 to 50%, preferably 10 to 40%. This may comprise a large proportion of titanium dioxide (eg., 10 to 30% titanium dioxide based on coating composition) and a small amount (often less than 5%, generally less than 1%), pigment of a different colour, if the coating composition is not white. Suitable additional pigments include calcium carbonate in amounts of up to 20%. Other optional components include glycols such as ethylene and propylene glycol in amounts of from 1 to 7% and solvents such as trimethyl panetanediol isobutyrate and di(ethylene glycol) butyl ether in amounts of up to 3%. The coating composition may also contain pigment dispersing agents which can be solvents or surfactants; biocides such as amine compounds; foam control agents such as oils, fatty acids and silicones; slip and mar additives; adhesion promoters. Silica based materials such as cristobalite in amounts of up to 2%, quartz in amounts up to 20% and clay in amounts up to 10% may also be included, generally for rheological properties and stability.

Preferably the coating composition contains colouring agent and in particular pigment, and is a latex based paint.

We have also found that the entrapping agents, especially the cyclodextrins, are beneficial in reducing odors inherent to other products.

Thus in a further aspect of the invention we provide use of an entrapping agent to reduce the odor emitted by a product after its manufacture, comprising adding to the product during its manufacture the entrapping agent, wherein the entrapping agent remains in the product after manufacture. The entrapping agent is preferably cyclodextrin and has any of the features discussed above.

### EXAMPLES

The following are non-limiting Examples of odor-reducing compositons which can be used in the present invention.

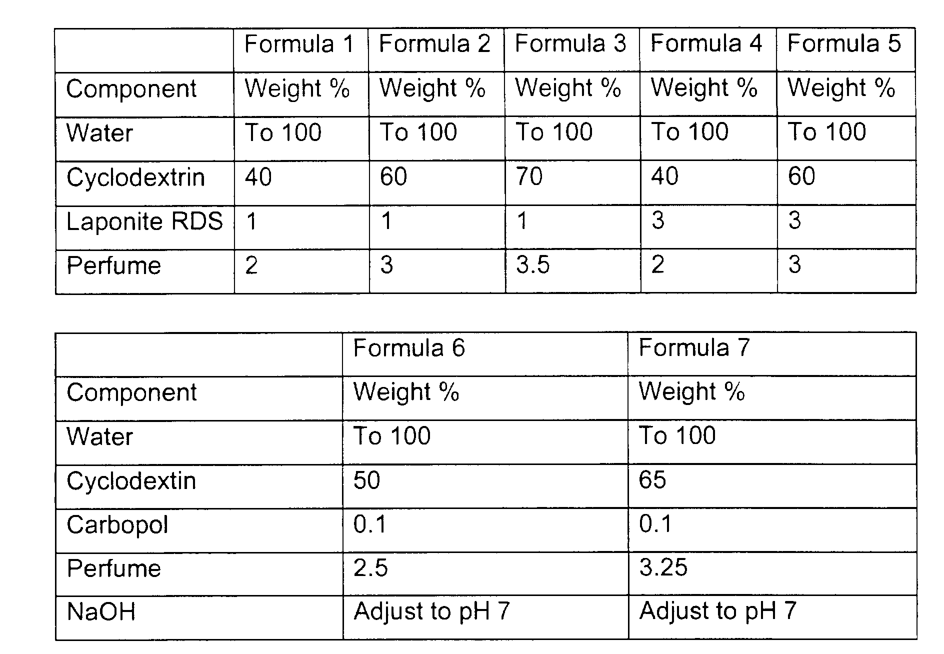

The following are examples of paint formulations which have been treated with cyclodextrin entrapping agents according to the invention.

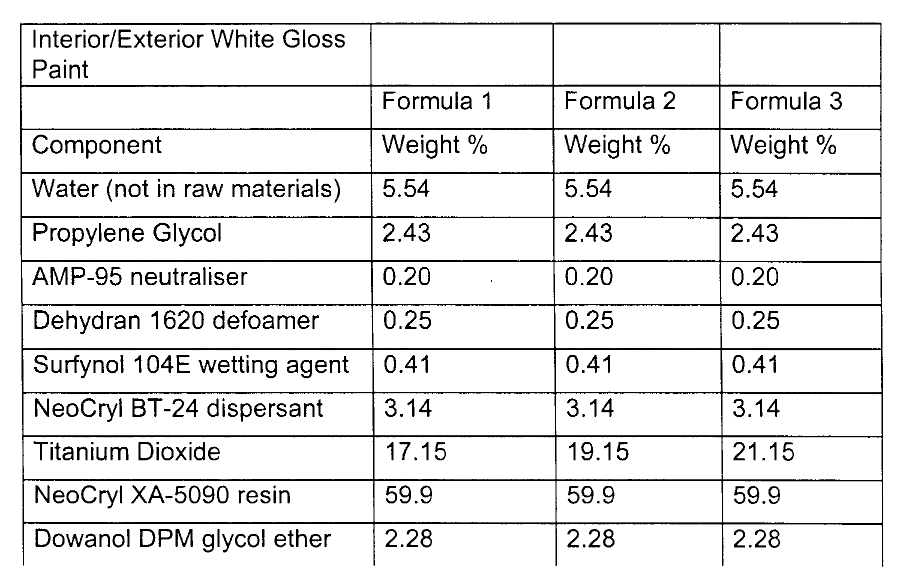

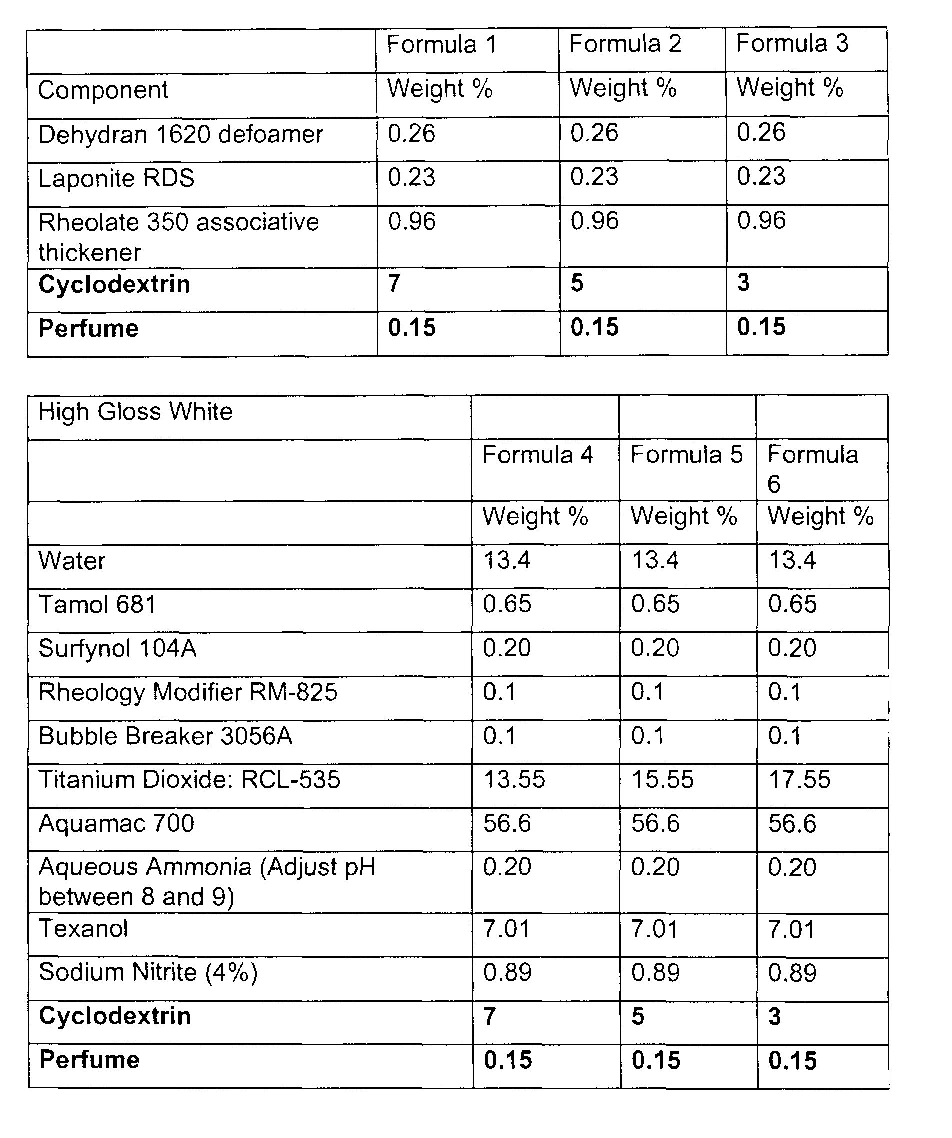

The following are examples of formulations which can be sprayed onto a coating material which has already been applied to a substrate to reduce the odor of the coating material.

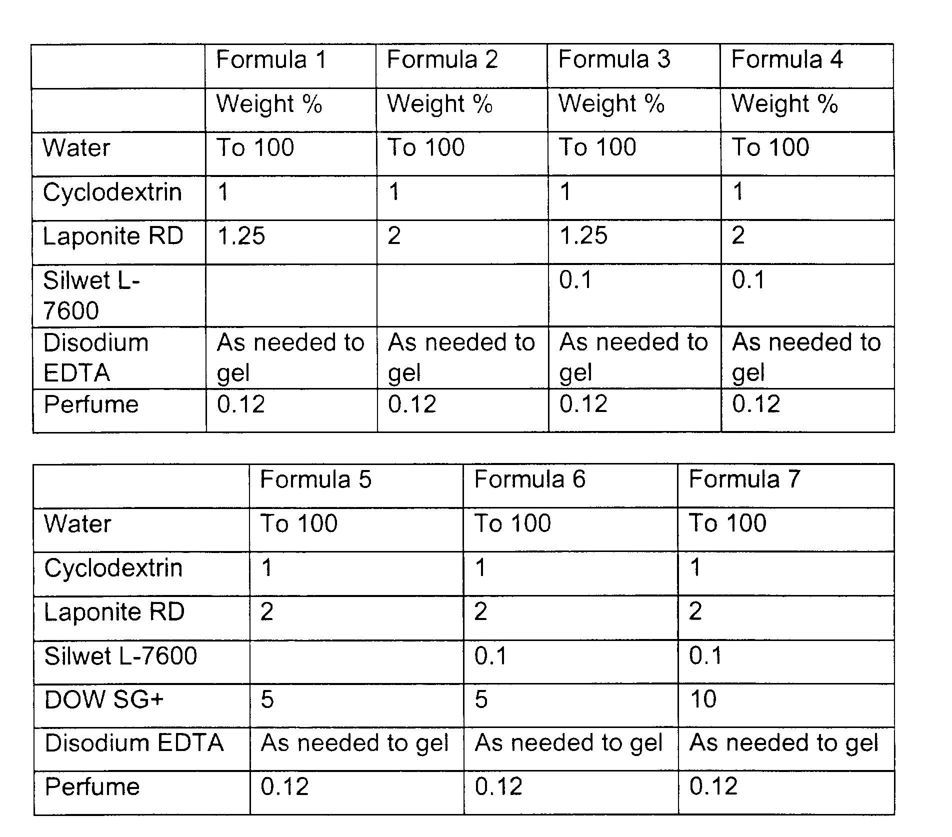

## Claims

1. Use of an entrapping agent to reduce the odor emitted by an aqueous latex-based coating material, preferably a latex paint.

2. Use according to claim 1, wherein the amount of entrapping agent is at least 0.025% by weight entrapping agent based on total weight of coating material.

3. Use according to claim 1 in which the entrapping agent is cyclodextrin.

4. Use according to claim 1 in which the entrapping agent is zeolite.

5. Use according to claim 1 wherein the odor reduced is odor emitted prior to application of the coating material to a substrate.

6. Use according to claim 1 in which the odor reduced is odor emitted as the coating material dries after application to a substrate.

7. Use according to claim 3 in which the cyclodextrin is selected from the group consisting of hydroxypropyl alpha-cyclodextrin, methylated alpha-cyclodextrin, methylated beta-cyclodextrin, hydroxyethyl beta-cyclodextrin, hydroxypropyl beta-cyclodextrin, gamma-cyclodextrin, hydroxypropyl gamma-cyclodextrin, hydroxyethyl gamma-cyclodextrin, methyl gamma-cyclodextrin and mixtures thereof.

8. Use according to claim 1 in which the entrapping agent is used in uncomplexed form.

9. A process for reducing the odor emitted by an aqueous latex-based coating material, preferably a latex paint, comprising adding to the coating material during or after its manufacture an entrapping agent, whereby the odor emitted by the coating material is reduced.

10. A process according to claim 9 wherein the amount of entrapping agent is at least 0.025% by weight entrapping agent based on total weight of coating material.

11. A process according to claim 9 in which the entrapping agent is cyclodextrin.

12. A process according to claim 9 in which the entrapping agent is zeolite.

13. A process according to claim 9 in which the odor reduced is the odor emitted prior to application of the coating material to a substrate.

14. A process according to claim 9 in which the odor reduced is the odor emitted as the coating material dries after application to a substrate.

15. A process according to claim 11 in which the cyclodextrin is selected from the group consisting of hydroxypropyl alpha-cyclodextrin, methylated beta-cyclodextrin, hydroxyethyl beta-cyclodextrin, hydroxypropyl beta-cyclodextrin, gamma-cyclodextrin, hydroxypropyl gamma-cyclodextrin, hydroxyethyl gamma-cyclodextrin methyl, alpha-cyclodextrin and mixtures thereof.

16. A process according to claim 9 in which the entrapping agent is added in uncomplexed form.

17. A process of treating a coating material, preferably paint, so as to reduce the odor it emits comprising adding to a volume of not more than 60 gallons of the coating material an odor-reducing composition comprising entrapping agent.

18. A process according to claim 17 in which the entrapping agent is cyclodextrin.

19. A process according to claim 17 in which the entrapping agent is zeolite.

20. A process according to claim 18 in which the cyclodextrin is selected from the group consisting of hydroxypropyl alpha-cyclodextrin, methylated alpha-cyclodextrin, methylated beta-cyclodextrin, hydroxyethyl beta-cyclodextrin, hydroxypropyl beta-cyclodextrin,gamma-cyclodextrin, hydroxypropyl gamma-cyclodextrin, hydroxyethyl gamma-cyclodextrin, methyl gamma-cyclodextrin and mixtures thereof.

21. A process according to claim 17 in which the volume of coating material is not more than 20 gallons.

22. A process according to claim 17 in which the volume of coating material is not more than 5 gallons, preferably not more than 3 gallons, more preferably not more than 1 gallon.

23. A process according to claim 17 comprising mixing the odor-reducing composition into the volume of coating material for 1 to 15 minutes.

24. A process according to claim 17 comprising applying at least some of the treated coating material to a substrate, preferably a wall, floor, ceiling or furniture, within 2 weeks of adding the odor-reducing composition to the coating material.

25. A process according to claim 17 in which the entrapping agent is present in the coating material after addition of the odor-reducing composition in an amount of at least 0.025%, preferably at least 1%, more preferably at least 3%.

26. A process according to claim 17 in which the entrapping agent is present in the odor-reducing composition in uncomplexed form.

27. A process according to claim 17 in which the odor-reducing composition is in liquid form.

28. A process according to claim 27 in which the concentration of entrapping agent in the odor-reducing composition is at least 0.025 wt.%, based on total weight of liquid composition, preferably 20 to 60% by weight.

29. A process according to claim 17 in which the odor- reducing composition is in solid form.

30. A process according to claim 29 in which the concentration of entrapping agent in the odor-reducing composition is at least 50 wt.%, based on total weight of solid composition.

31. A process according to claim 17 in which the coating material comprises a binder polymer and the odor-reducing composition contains the same binder polymer.

32. A process of treating a coating material, preferably paint, so as to reduce the odors it emits comprising comprising adding to the coating material an odor-reducing composition comprising entrapping agent and subsequently applying at least some of the treated coating material to a substrate, preferably a wall, floor, ceiling or furniture, within 2 weeks of adding the odor-reducing composition to the coating material.

33. A process according to claim 32 wherein the amount of entrapping agent is at least 0.025% by weight entrapping agent based on total weight of coating material.

34. A process according to claim 32 comprising applying at least some of the coating material to the substrate within 3 hours, preferably within 2 hours, more preferably within 1 hour, of adding the odor reducing composition to the coating material.

35. A kit for use in reduction of the odor emitted by paint comprising
(A) an odor-reducing composition comprising an entrapping agent, and
(B) instructions to add the odor-reducing composition to a coating composition, preferably a paint composition, in order to reduce the odor emitted by the composition.

36. A kit according to claim 35 in which the entrapping agent is cyclodextrin.

37. A kit according to claim 35 in which the entrapping agent is zeolite.

38. A kit according to claim 35 in which the odor-reducing composition is in liquid form.

39. A kit according to claim 35 in which the concentration of entrapping agent in the odor-reducing composition is at least 0.025 wt%, based on total weight of liquid composition, preferably 20 to 60% by weight.

40. A kit according to claim 35 in which the odor-reducing composition is in solid form.

41. A kit according to claim 40 in which the concentration of entrapping agent in the odor-reducing composition is at least 50wt%, based on total weight of composition.

42. A kit according to claim 36 in which the cyclodextrin is selected from the group consisting of hydroxypropyl alpha-cyclodextrin, methylated alpha-cyclodextrin, methylated beta-cyclodextrin, hydroxyethyl beta-cyclodextrin, hydroxypropyl beta-cyclodextrin,gamma-cyclodextrin, hydroxypropyl gamma-cyclodextrin, hydroxyethyl gamma-cyclodextrin, methyl gamma-cyclodextrin and mixtures thereof.

43. A kit according to claim 35 in which the entrapping agent is present in the odor-reducing composition in uncomplexed form.

44. A kit according to claim 35 in which the odor-reducing composition is provided in a container and the instructions are to add the entire content of the container to a single volume of coating composition simultaneously.

45. A kit according to claim 35 in which the instructions are to add the odor-reducing composition to a volume of coating composition not more than 60 gallons.

46. A kit according to claim 35 in which the instructions recite any of the process features set out in claims 23 to 25.

47. Use of an entrapping agent to reduce the odor emitted by a product after manufacture, comprising adding to the product during manufacture the entrapping agent, wherein the entrapping agent remains in the product after manufacture.

48. Use according to claim 47 in which the entrapping agent is cyclodextrin.

49. Use according to claim 47 in which the entrapping agent is zeolite.

50. Use according to claim 48 in which the cyclodextrin is selected from the group consisting of hydroxypropyl alpha-cyclodextrin, methylated alpha-cyclodextrin, methylated beta-cyclodextrin, hydroxyethyl beta-cyclodextrin, hydroxypropyl beta-cyclodextrin,gamma-cyclodextrin, hydroxypropyl gamma-cyclodextrin, hydroxyethyl gamma-cyclodextrin, methyl gamma-cyclodextrin and mixtures thereof.

51. Use according to claim 47 in which the entrapping agent is used in uncomplexed form.

52. A process for the reduction of the odor emitted by a product subsequent to its manufacture comprising adding to the product during its manufacture an entrapping agent, wherein the entrapping agent is present in the product after manufacture and whereby the odor emitted by the product is reduced.

53. A process according to claim 52 wherein the entrapping agent has any of the features recited in claims 48 to 51.

54. A use according to claim 1, a process according to claim 9, a process according to claim 17, a process according to claim 32, a kit according to claim 35, a use according to claim 47 or a process according to claim 52 wherein the entrapping agent is cyclodextrin and the cyclodextrin is used in monomeric, water-soluble form.

55. Use of an entrapping agent to reduce the odor emitted from a liquid product which contains (i) at least one polymer of vinyl and/or acrylic and/or urethane monomer and (ii) degradation products and/or residual unreacted monomer and/or by-products thereof.

56. Use according to claim 55 in which the polymer is a vinyl-acrylic copolymer or acrylic homopolymer or a polyurethane.

57. Use according to claim 55 in which the entrapping agent is cyclodextrin.

58. Use according to claim 57 in which the ratio of cyclodextrin to polymer is from 0.001 to 5, preferably 0.005 to 3.

59. Use according to claim 55 in which the degradation product is acetate, short chain aldehyde, ketone or fatty acid.

60. A process for reducing the odor emitted by a liquid product which contains
(i) at least one polymer based on vinyl and/or acrylic and/or urethane monomers and (ii) degradation products and/or residual unreacted monomer and/or by-products thereof comprising adding to the product during or after its manufacture an entrapping agent whereby the odor is reduced.
